(19) Europäisches Patentamt
European Patent Office
Office européen des brevets

(11) **EP 3 651 062 B1**

(12) **EUROPEAN PATENT SPECIFICATION**

(45) Date of publication and mention
of the grant of the patent:
**29.12.2021 Bulletin 2021/52**

(51) Int Cl.:
***G06K 9/00*** *(2006.01)*

(21) Application number: **19207057.1**

(22) Date of filing: **05.11.2019**

(54) **A METHOD AND A SYSTEM FOR BIOMETRIC IDENTIFICATION OF A SUBJECT**

EIN VERFAHREN UND EIN SYSTEM ZUR BIOMETRISCHEN IDENTIFIZIERUNG EINES SUBJEKTS

UNE MÉTHODE ET UN SYSTÈME D'IDENTIFICATION BIOMÉTRIQUE D'UN SUJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.11.2018 IT 201800010069**

(43) Date of publication of application:
**13.05.2020 Bulletin 2020/20**

(73) Proprietor: **Orway S.r.l.**
**10151 Torino (IT)**

(72) Inventors:
• **ATROSHCHENKO, Valery**
**10098 Rivoli (Torino) (IT)**
• **ATROSHCHENKO, Igor**
**10151 Torino (IT)**

(74) Representative: **Deambrogi, Edgardo et al**
**Jacobacci & Partners S.p.A.**
**Corso Emilia 8**
**10152 Torino (IT)**

(56) References cited:
**EP-A1- 1 353 292        EP-A1- 2 362 179**
**US-A1- 2015 104 083     US-A1- 2017 220 844**
**US-A1- 2017 323 139     US-A1- 2018 260 602**

• **VENKATA REDDY P ET AL: "A New Method for
Fingerprint Antispoofing using Pulse
Oxiometry", BIOMETRICS: THEORY,
APPLICATIONS, AND SYSTEMS, 2007. BTAS
2007. FIRST IEEE INTERNATIONAL
CONFERENCE ON, IEEE, PI, 1 September 2007
(2007-09-01), pages 1-6, XP031189946, ISBN:
978-1-4244-1596-0**

## Description

The present invention concerns in general the authentication of a subject, and in particular the biometric identification of a subject.

More specifically, the present invention concerns a method of biometric identification of a subject according to claim 1, and a biometric identification system of a subject according to claim 16.

The biometric identification of a subject may occur by means of the comparison of predetermined univocal biological characteristics of each subject with a database that collects the aforementioned biological characteristics of a multitude of registered subjects, and the biological characteristics that are more suitable for automatic detection are the fingerprint, the iris, the face, the voice.

The biometric identification of a subject by means of his/her fingerprint, i.e., the trace left on a contact support by the dermatoglyphs of the last phalanx of the fingers of the hands, i.e., by the alternation of ridges and grooves present on the fingertips, or an image of the dermatoglyphs themselves, is now widespread in a large number of applications where it is necessary to identify a subject with certainty, for example, to reserve access to a place or a service to subjects registered as authorized subjects. It is an advantageously ergonomic technique and easy to use for anyone, since it simply requires one to place his/her finger on a fingerprint acquisition device (scanner), and also avoids any possible social discomfort for a subject who does not want to allow his/her identification through the use of voice, a facial image, or an eye exam.

There are several technologies for the acquisition of a fingerprint of a subject. Optical technology is based on the total internal reflection of an illuminating optical radiation by the fingertip of a subject and outputs a two-dimensional image of the object in contact with an acquisition area of the scanner. Capacitive technology is based on the modulation of the electrostatic field induced by the ridges present on the fingertips of a subject's finger and outputs a two-dimensional image of the reliefs of the object placed in contact with an acquisition area of the scanner. Radiofrequency technology is based on the modulation of the electromagnetic field reflected by the ridges on the fingertips of a subject's finger and outputs a two-dimensional image of the reliefs of the object placed in contact with an acquisition area of the scanner. Ultrasonic technology is based on the reflection of an ultrasonic radiation by the fingertip of a subject and outputs a three-dimensional image of the reliefs of the object placed in contact with an acquisition area of the scanner.

However, the technologies of biometric identification of a subject have several drawbacks.

Among these, spoofing or falsification of identity consists in misleading a detection of a biometric system characteristic with objects or means that make a faithful replica of the biometric characteristic of a specific subject. For example, an accurate cast of a subject's fingerprint could be acquired to make a perfectly compliant fingerprint model and an artificial substrate bearing said (falsified) fingerprint model could be substituted for placing the subject's finger on an acquisition device (scanner) to enable it to be identified, albeit fraudulently.

Moreover, when an unauthorized person illegally comes into possession of (a copy of) a biometric characteristic of a third party, there is no possibility for the legitimate owner to easily modify it, as would be the case with a password, since a subject has a finite and limited number of biometric features at his/her disposal (e.g. ten fingers, two irises, one face).

A biometric identification technology also has the drawback that it may fail if the biometric characteristic provided for recognition is not of sufficient quality to ensure accurate recognition. With specific reference to fingerprints, this is particularly the case if a subject's dermatoglyph is compromised, for example due to skin diseases or the use of certain substances, including detergents. In this case, a subject may encounter problems in obtaining an authorization via biometrics, even the denial of authorization, and for this reason products and services based on the use of recognition of a fingerprint maintain alternative authentication technologies still based on passwords or similar factors of authentication by knowledge, i.e. they alternatively allow authentication credentials consisting of information known to the user, such as a personal identification number or PIN, a name, a password, an answer to a predefined question or a sequence of characters or touch movements on a touch screen.

The article "A New Method for Fingerprint Antispoofing using Pulse Oximetry" by P. Venkata Reddy et al. in First IEEE International Conference on Biometrics: theory, applications and systems, 2007, discloses a method of liveness detection based on pulse oximetry detecting light partly absorbed by haemoglobin by amounts which differ depending on whether it is saturated with oxygen or deoxygenated haemoglobin.

EP 1 353 292 discloses an optical biometric sensor apparatus and methods for analysing images of biometric features such as fingerprints, which are adapted to distinguish between live body members and inanimate objects by transmitting IR light through an object. A genuine live body member is detected as the IR transmission characteristics of a live body member vary with the human heartbeat.

US 2017/220844 discloses an optical sensor system for a biometric object including a plurality of display elements for illuminating the biometric object and a plurality of light sensing elements configured to detect light from a sensing region that has passed through an aperture layer and a collimator layer.

The object of the present invention is to provide a satisfactory solution to the problems described above while avoiding the drawbacks of the known art.

More specifically, the object of the present invention is to provide a technology for the biometric identification of a subject that provides greater difficulties in falsification and lower risks of failure in the case of partial impairment of an attribute of the biometric characteristic of the subject, while respecting the simplicity of use, and the reproducibility of the act of identification achieved with current technologies, and allowing easy manufacture at low cost.

According to the present invention, this object is achieved through a method of biometric identification of a subject having the characteristics mentioned in claim 1

A system of biometric identification of a subject having the characteristics claimed in claim 14 is also the subject of the invention.

Particular embodiments form the subject of the dependent claims, the contents of which are to be understood as forming an integral or complementary part of the present description.

The basis of the proposed solution is the scanning of a biological object in the form of a human finger with a special series of visible spectrum and near-infrared radiations.

The fingertip tissue of a human finger has a complex, multi-layered structure. In particular, the skin consists of two main layers: an upper layer or epidermis and a lower layer or dermis. Underneath the skin is a muscle layer. The result of this succession of heterogeneous layers is a specific interaction of the optical radiation with this biological tissue which, from the optical point of view, behaves as an absorbent medium with remarkable diffusion properties.

The main interactions of an external optical radiation with the biological tissue of a human finger occur in the skin and under the skin, in the fibers of the muscle tissue.

The absorption of optical radiation is mainly determined by the melanin contained in the epidermis and by the hemoglobin of the blood present in the dermis and in the muscle tissue. The amount of melanin is different among people with different skin colors and different ethnic groups and, in the same person, in different areas of the body. For example, in a person with blond hair the amount of melanin is lower than in a person with brown hair. The only people on earth who do not have melanin in general are albinos.

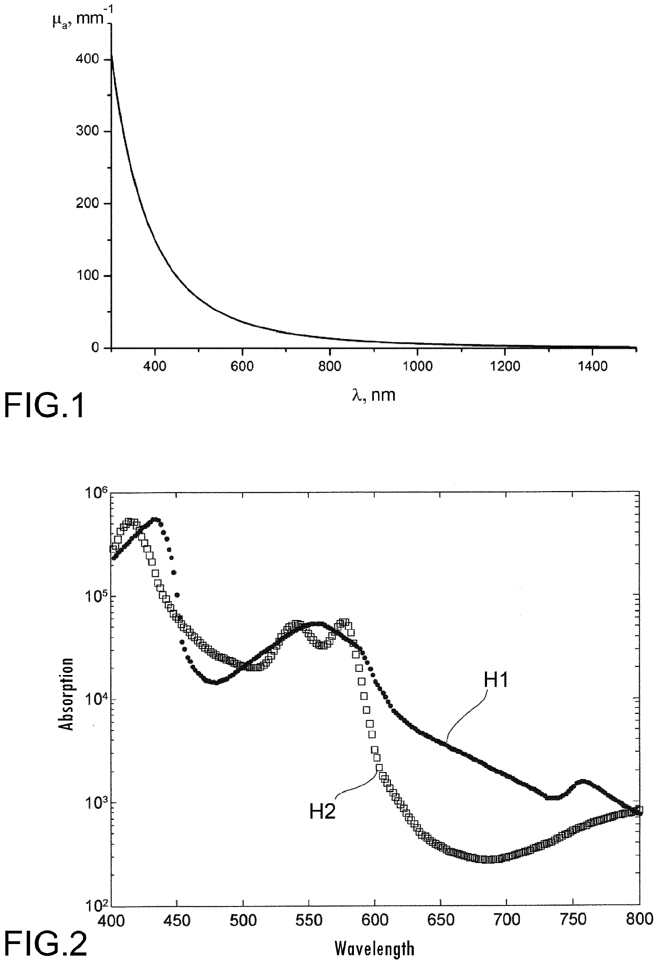

The absorption of optical radiation in a living biological tissue of a human finger depends substantially on the wavelength of the radiation. Well-known graphs of the absorption coefficients of melanin and blood are shown by way of example in Figures 1 and 2 respectively. Specifically, Figure 1 shows the decreasing evolution of the absorption coefficient of melanin as the wavelength increases, and Figure 2 shows the evolution of the absorption curve H1 of the blood with oxyhemoglobin and the absorption curve H2 of the blood with deoxyhemoglobin as the wavelength increases.

The diffusion of optical radiation is determined by the multi-layered structure of the epidermis, the fibrous structure of the dermis, and the collagen fibers of the muscle tissue. The diffusion in the biological tissue of a human finger depends significantly on the wavelength, and the diffusion peak is in the range of the optical radiation corresponding to red wavelengths. The degree of absorption and diffusion also depends on the thickness of the respective components of the biological tissue of a human finger, which determines the difference in the absorption and diffusion parameters for different biological objects, particularly between different fingers and between fingers of different people.

When a living biological tissue of a human finger is compressed, the diffusion for the individual wavelengths of the optical radiation changes significantly. This is associated with an increase in the optical homogeneity of the tissue. This is due to the consolidation of diffusion centers (e.g. collagen fibers of the muscle tissue) and the removal of blood from the area subject to pressure. For example, for a wavelength of 640nm, diffusion and absorption decrease up to 40 times. It is a dynamic process associated with changes over time and with the time interval in which these changes occur.

In short, the present invention is based on the principle of achieving a technology of biometric identification of a subject based on a variety of attributes of an identification portion of a subject to which a biometric characteristic is associated and on a flexibility of use of the biometric data associated with said attributes, which determines a greater richness and therefore complexity of the biometric characterization that may be obtained therefrom, whereby a greater difficulty of falsification is obtained.

The variety of attributes of an identification portion of a subject with which a biometric characteristic is associated, in this case a dermatoglyph present on an identification portion of a subject, such as the fingertip of one of his/her fingers, or a fingerprint acquired from said identification portion, derives from the consideration of interdisciplinary attributes specific to that identification portion. Specifically, the interdisciplinary attributes originate from the fields of medicine, biology, physics, biological physics, biometrics.

Advantageously, the present invention achieves the predetermined object through a technology that includes two components, respectively a hardware component composed of a device for acquiring a biometric characteristic associated with an identification portion of a subject with which is associated a biometric characteristic, such as the finger of a subject, and a variety of attributes of said identification portion, and a software component, i.e., a control algorithm for the hardware component and a processing algorithm for the data acquired by the hardware component, also with reference to a database of biometric data of registered subjects.

Specifically, the acquisition device of the hardware component uses a set of active emissions (multispectral scanning) with a different spatial scanning topology for the acquisition of a plurality of attributes of the identification portion of a subject. In the event that the identification portion of a subject is a finger of the subject, the set of emissions is controlled to scan a finger at the inside, i.e. to scan in depth the skin of the finger, as well as detect the relative superficial dermatoglyph.

The algorithm for processing the data acquired by the hardware component performs the encoding of the data and the comparison with a database of biometric data of registered subjects, preferably according to matching techniques for isomorphic comparison wherein a positive result of the comparison is obtained only by correspondence with all the identification elements of the biometric data, unlike the matching techniques for homomorphic comparison wherein a positive result of the comparison is obtained by even partial correspondence of the identification elements of the biometric data.

Advantageously, the technique according to the invention allows the use of acquired biometric data, including the fingerprint, only when it is established that they have been obtained from a real and living finger of a subject.

Ultimately, the technique according to the invention is based on the joint verification of two sets of biometric data, respectively a set of data related to a fingerprint and a set of data related to the finger, or more generically to the substrate of the fingerprint, of which are evaluated characteristics of the anatomical structure and vital functions in at least one identification portion. The joint verification of the two biometric datasets makes it possible to overcome quality problems of the dermatoglyph and to accept biometric data representing a fingerprint in lower quantity and/or quality without the need for alternative authorization tools.

Further features and advantages of the invention will be described in greater detail in the following detailed description of an embodiment thereof, provided by way of non-limiting example, with reference to the accompanying drawings wherein:

Figure 1 is a known graph representing the absorption coefficient of melanin as a function of the wavelength of an incident optical radiation referred to above;

Figure 2 is a known graph representing a blood absorption coefficient as a function of the wavelength of an incident optical radiation referred to above;

Figure 3 is an illustrative representation according to a top view of some components of a biometric identification system of the invention, according to a first embodiment;

Figure 4 is an illustrative representation in a section view according to the line IV-IV of Figure 3 of some components of the biometric identification system of the invention, in the first embodiment;

Figure 5 is an illustrative representation in a section view according to the line V-V of Figure 3 of some components of the biometric identification system of the invention, in the first embodiment;

Figure 6 is an illustrative representation according to a top view of some components of a biometric identification system of the invention, in a second embodiment;

Figure 7 is a schematic representation of the biometric identification system of the invention;

Figure 8a is a schematic representation of the process of subsurface scattering of an optical radiation in a human finger;

Figure 8b is a schematic representation of a condition for verifying whether an identification portion is a biological tissue of the fingertip of a human finger;

Figure 8c is a representative diagram of the diffusion profiles of an optical radiation in three different materials;

Figure 8d is a diagram representing the evolution of an attenuation coefficient of the diffusion profile of a biological tissue of the fingertip of a human finger;

Figure 9a shows a first and second position taken by a human finger with respect to a support surface of the biometric identification system of the invention, respectively a position away from the support surface and a position in contact (and possible pressure) of the finger on the support surface;

Figure 9b is a diagram representing the evolution over time of the intensity of a response optical radiation from a finger of a living subject at a predetermined detection wavelength with respect to a response optical radiation $R_{rif}$ from said finger at a reference detection wavelength, where a position of the human finger away from the support surface and a position of the finger in contact (and possible pressure) on the support surface follow one to the other over time, respectively;

Figure 10 is a diagram representing the evolution of the intensity of response optical radiations from the finger of a living subject, due to the periodic variation of the hemoglobin saturation in the blood due to the blood circulation in the biological tissue of the fingertip; and

Figure 11 is a further diagram representing the evolution of the intensity of the response optical radiations from a finger of a living subject, due to the periodic variation of the hemoglobin saturation in the blood as a result of the blood circulation in the biological tissue of the fingertip.

In the figures, identical or functionally equivalent elements or components have been indicated with the same references.

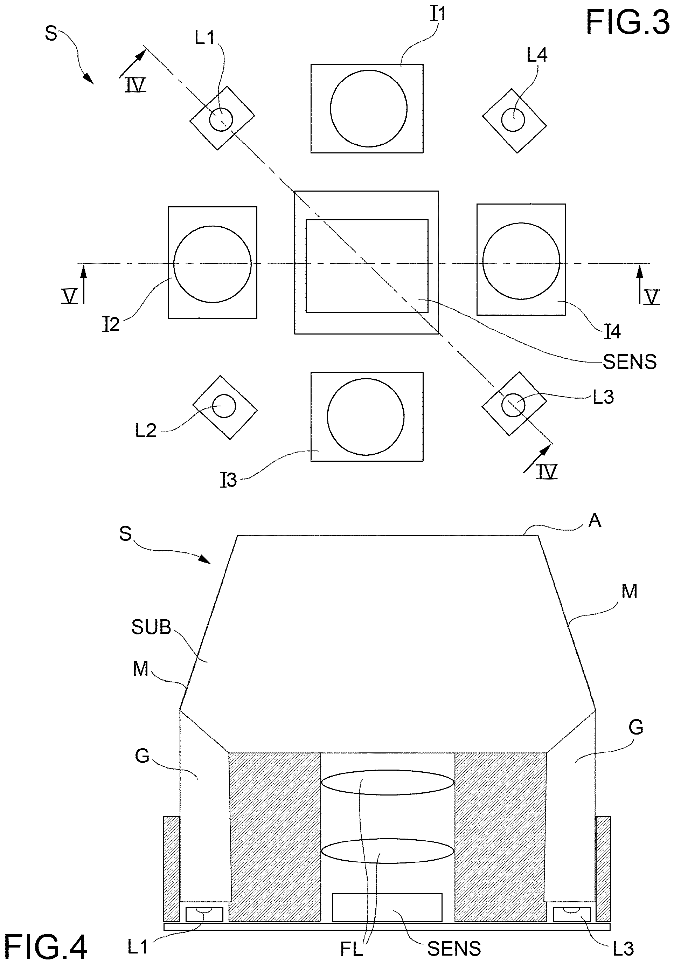

Figures 3 to 5 schematically show a system S for biometric identification of a subject, comprising a plurality of interrogating optical radiation sources, adapted to emit optical radiation at a respective plurality of predetermined interrogation wavelengths towards an identification portion of a subject, a plurality of optical radiation sources illuminating said identification portion of a subject, and optical sensor means adapted to detect a response optical radiation at a plurality of predetermined detection wavelengths.

According to a first currently preferred embodiment, the plurality of interrogating optical radiation sources includes a plurality of first LED devices, for example four LED devices I1, I2, I3, I4 adapted to emit respectively a radiation at an interrogation wavelength belonging to a range of the electromagnetic spectrum corresponding to the red colour, a radiation at an interrogation wavelength belonging to a range of the electromagnetic spectrum corresponding to the green colour, a radiation at an interrogation wavelength belonging to a range of the electromagnetic spectrum corresponding to the blue colour and a radiation at an interrogation wavelength belonging to a range of the electromagnetic spectrum corresponding to infrared.

The plurality of illuminating optical radiation sources of the biometric identification system according to the embodiment of Figures 3 to 5 includes a plurality of second LED devices, for example four LED devices or groups of LED devices L1, L2, L3, L4, preferably identical, adapted to emit an optical radiation at at least the same illuminating wavelength selectable from a set of possible illuminating wavelengths.

In the illustrative embodiment of Figures 3 to 5, the optical radiation sources are located according to circumferential arrangements, preferably the illuminating sources L1-L4 are located on an external circumferential arrangement, and the interrogation sources 11-14 are located on an circumferential arrangement internally concentric to the circumferential arrangement of the illuminating sources L1-L4.

The optical radiation sources 11-14 and L1-L4 are in turn arranged concentric to sensor means SENS, including a sensor or group of optical sensors, adapted to detect a response optical radiation emitted partially by an identification portion of a subject, at a plurality of predetermined detection wavelengths. The arrangement of interrogating sources 11-14 and of the illuminating sources L1-L4 is concentric to the optical sensor means SENS.

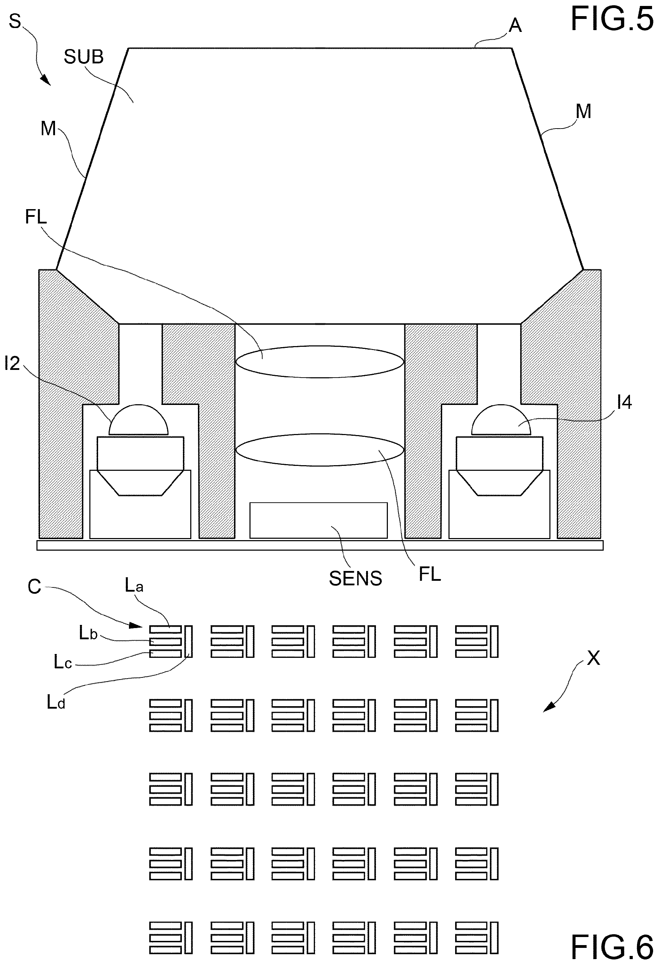

As better represented in the views of Figures 4 and 5, the arrangements of the interrogating sources 11-14 and of the illuminating sources L1-L4, as well as the sensor means SENS, are separated from a support surface A adapted to receive the identification portion of a subject (typically the fingertip) through an optically transparent substrate SUB, and the sensor means SENS are associated with a system of focusing lenses FL of the response optical radiation.

Respective waveguides G are coupled to the light sources L1-L4 to guide the illuminating optical radiation to the support surface A through the optically transparent substrate SUB, which is preferably delimited laterally by reflecting surfaces M.

In a second embodiment, shown in Figure 6, the interrogating sources and the illuminating sources are formed collectively by a matrix X of cells C of LED devices, each of which includes a plurality of LED devices - in the example, four LED devices indicated $L_a$, $L_b$, $L_c$, $L_d$ - according to a predetermined arrangement, respectively adapted to emit optical radiation at a wavelength belonging to a range of the electromagnetic spectrum corresponding to the red colour, at an interrogation wavelength belonging to a range of the electromagnetic spectrum corresponding to the green colour, at an interrogation wavelength belonging to a range of the electromagnetic spectrum corresponding to the blue colour, at an interrogation wavelength belonging to a range of the electromagnetic spectrum corresponding to infrared. The selective control of the emission of optical radiation from one or more LEDs of a cell C simultaneously allows one to obtain respectively an emission at an interrogation wavelength corresponding to the red colour, at an interrogation wavelength corresponding to the green colour, at an interrogation wavelength corresponding to the blue colour, at an interrogation wavelength corresponding to infrared, and at a white light illumination wavelength.

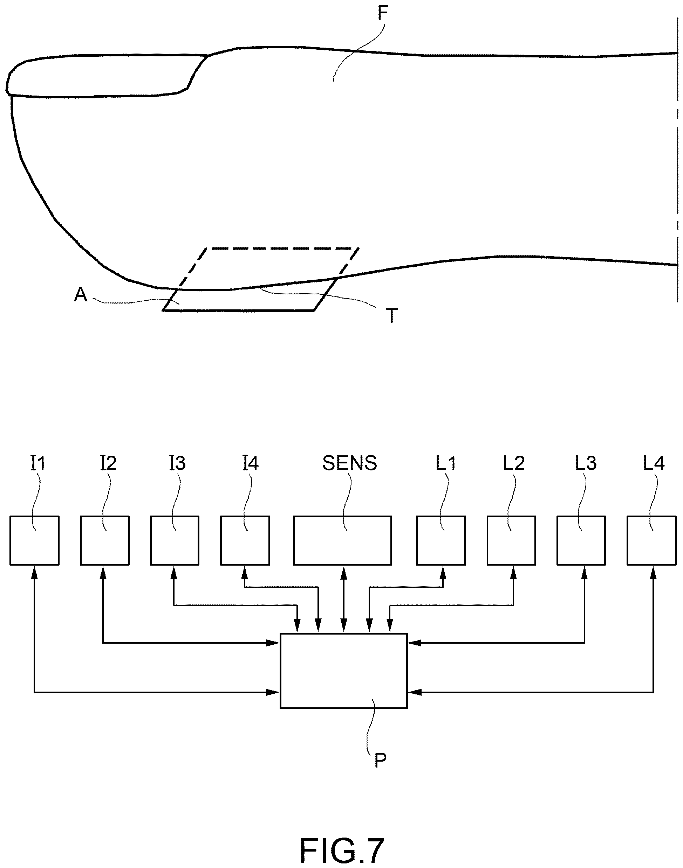

Figure 7 shows an electrical block diagram of the biometric identification system of the invention, wherein P indicates signal control and processing means, for example one or more processor units, coupled to the plurality of interrogating optical radiation sources 11-14 and to the plurality of illuminating optical radiation sources L1-L4.

The illuminating optical radiation sources L1-L4 may coincide with the interrogating optical radiation sources 11-14 in the second embodiment wherein each LED cell C includes a plurality of selectively controllable LED devices to operate as interrogating optical radiation sources or as illuminating optical radiation sources. Specifically, the control and processing means P are arranged to control each LED device cell of the matrix such that at least one random or pseudo-random subset of said cells emits an optical radiation at an interrogation wavelength or an optical radiation at at least one illuminating wavelength according to a random or pseudo-random succession over time.

The control and processing means P are further coupled to the optical sensor means SENS for the acquisition of at least one identifying biometric data element of a finger of the subject from an identification portion of said finger, near or in contact with the support surface A, and are arranged to implement a method of biometric identification of a subject as better described in the remainder of this document.

In general, a method of biometric identification of a subject comprises the analysis of an identification portion of a subject with which is associated a biometric characteristic, and specifically the acquisition of at least one biometric identification data element of a finger of the subject from an identification portion of said finger and the comparison of said at least one biometric data element acquired with a database of biometric data associated with at least one registered subject.

The method of the invention comprises the emission of an interrogating optical radiation at a plurality of predetermined interrogation wavelengths towards an identification portion of the finger of the subject - or an object that is passed off as an identification portion of a human finger - and the reception, from said identification portion, of a response optical radiation at a plurality of predetermined detection wavelengths, due to subsurface scattering in the aforesaid identification portion, i.e., the penetration of at least one thickness of the identification portion corresponding to a skin thickness of a human finger and any internal reflection distributed by the interrogating optical radiation. On the basis of the response optical radiation, (i) whether the identification portion subjected to interrogating optical radiation is a biological tissue of the fingertip of a human finger and (ii) the vitality of the identification portion are verified, either alternatively or in combination.

Consequently, the result of the biometric identification of the subject is positive if the acquired biometric data element is associated with a subject registered in the biometric database, and if the identification portion is a biological tissue of the fingertip of a human finger and/or an identification portion of a living finger.

The verification of whether the aforesaid identification portion is a biological tissue of the fingertip of a human finger is based on the determination of a diffusion profile of the material constituting this identification portion by the interrogating optical radiation, the diffusion profile being a characteristic parameter of each material.

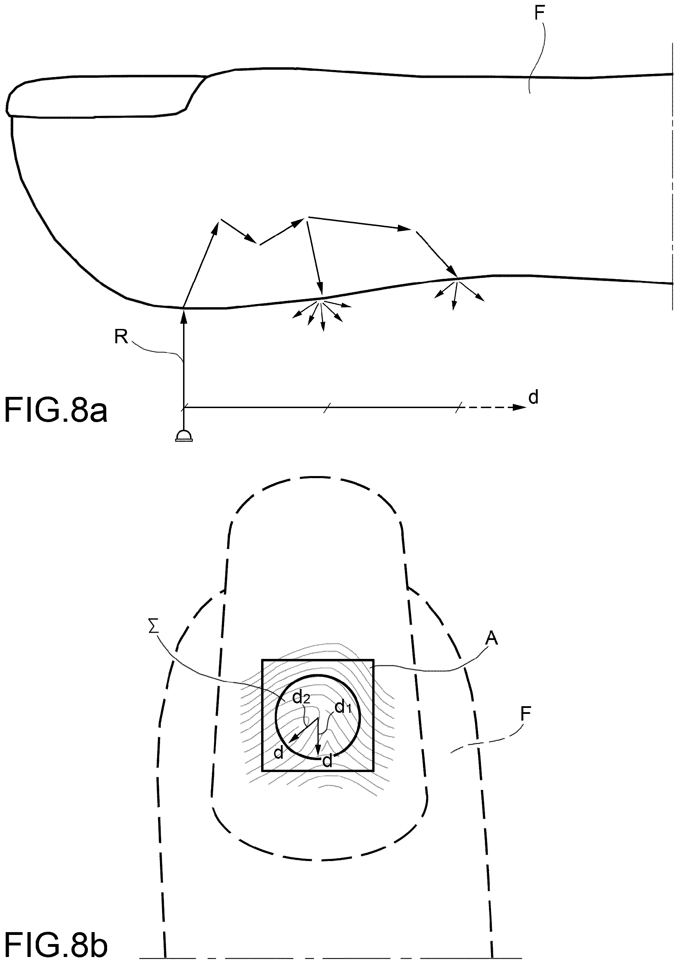

Figure 8a schematically shows the process of subsurface scattering of an interrogating optical radiation R in a human finger F. The interrogating optical radiation undergoes multiple diffusions within the skin layer of the fingertip of the finger F underlying the dermatoglyphs and constituting collectively the identification portion T of the finger F, and emerges as response optical radiation from a surrounding region of the fingertip with an intensity dependent on the path of radiation within the finger and on the distance of the point of emergence with respect to the incidence point of the interrogating optical radiation.

The diffusion profile is a diffusion profile determined preferably along a plurality of detection directions, for example $d_1$ and $d_2$, on a support surface A or parallel thereto, within a circular area or circular sector area $\Sigma$ of the material constituting said identification portion T, as shown in Figure 8b.

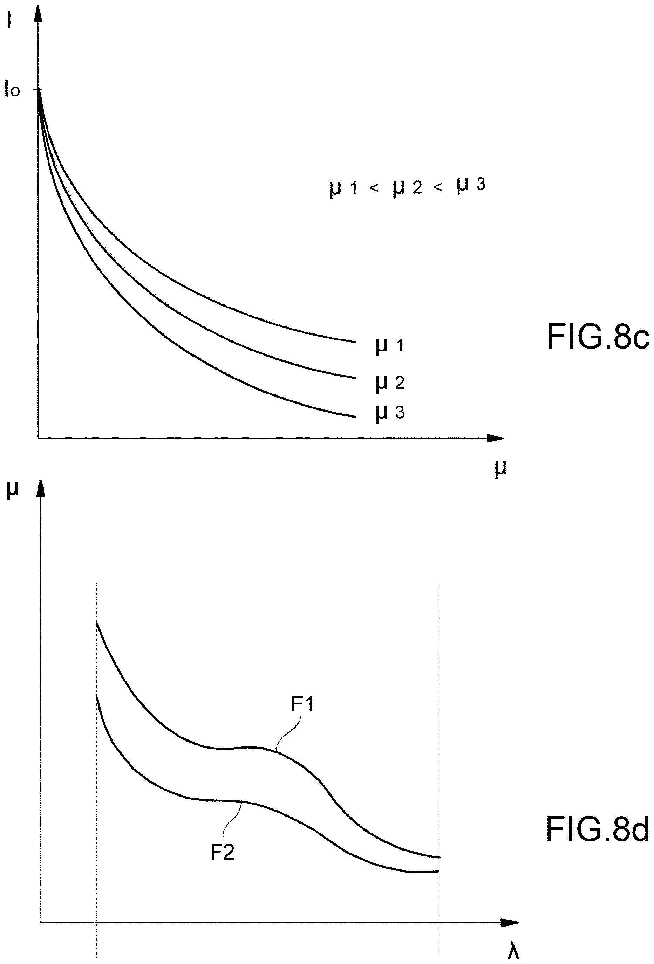

The diagram of Figure 8c shows three different schematic curves illustrating the diffusion profile of three different materials constituting an identification portion at a selected detection wavelength, wherein the abscissa indicates the distance d from the emission origin of the interrogating optical radiation (therefore, from the incidence point of the interrogating optical radiation on the finger) and the ordinate indicates the intensity I of the response optical radiation at a predetermined detection wavelength. The curves have an exponential decay evolution that may be represented according to the expression:

$$I = I_0 \cdot e^{-\mu d}$$

where $\mu$ is a attenuation coefficient specific of the curve.

A reference evolution of the parameter $\mu$ as a function of the wavelength $\lambda$ of the interrogation radiation for the biological tissues of the fingertips of two different human fingers (F1 and F2) is represented as a continuous line in Figure 8d in the window of the visible electromagnetic spectrum.

Specifically, the comparison is carried out between the value of an attenuation coefficient representative of the diffusion profile of the material constituting the identification portion at at least one of the detection wavelengths and a reference value of said parameter which is representative of the diffusion profile of the biological tissue of the fingertip of a human finger for the interrogating optical radiation. To this aim, the reference value of the parameter representative of the diffusion profile of the biological tissue of the fingertip of a human finger may be either a reference value of the parameter representative of the diffusion profile of the biological tissue of the fingertip of a generic human finger or a reference value of the parameter representative of the diffusion profile of the biological tissue of the fingertip of a specific subject registered in the biometric database, which requires authorization.

The determination that the identification portion subjected to analysis is a biological tissue of the fingertip of a human finger is reached if the value of the parameter representative of the diffusion profile of the material constituting said identification portion, at at least one predetermined detection wavelength, is identical to the reference value of the parameter representative of the diffusion profile of the biological tissue of the fingertip of an ideal human finger or of a specific subject registered at the predetermined detection wavelength or whether it differs therefrom within a predetermined tolerance threshold.

The comparison of the value of a parameter representative of said diffusion profile of the material constituting said identification portion with a reference value of said parameter representative of the diffusion profile of the biological tissue of the ideal or specific fingertip is preferably performed at a plurality of predetermined detection wavelengths.

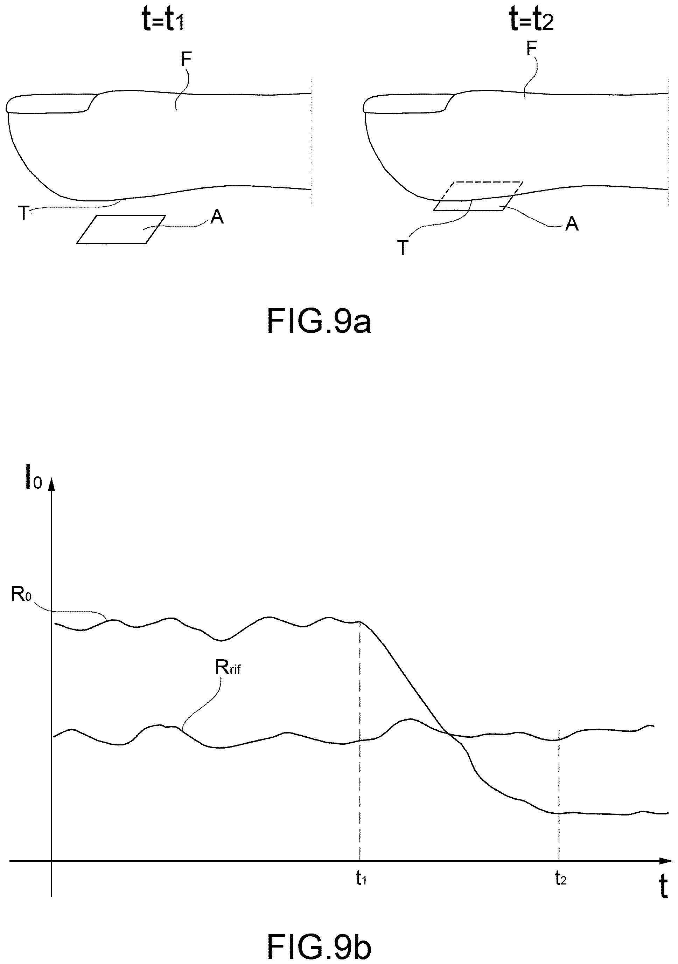

In a currently preferred embodiment shown with reference to Figures 9a and 9b, a verification whether the identification portion is a biological tissue and the verification of the vitality of the identification portion comprises the comparison of the intensity of the response optical radiation $R_o$ at at least one predetermined detection wavelength in the successive two time instants $t_1$, $t_2$ with the intensity of a response optical radiation $R_{rif}$ at a reference detection wavelength different from said at least one predetermined detection wavelength. The determination that said identification portion is a biological tissue and of the vitality of the identification portion T, shown in the position away from the support surface A at the time $t_1$ and in the position in contact (and possible pressure) on the support surface A at the time $t_2$ in Figure 9a, is reached if the ratio between:

- the difference between the intensity of the response optical radiation $R_o$ at the predetermined detection wavelength at the first time instant $t_1$ and the intensity of the response optical radiation $R_o$ at the predetermined detection wavelength at the second time instant $t_2$, and
- the difference between the intensity of the response optical radiation $R_{rif}$ at the reference detection wavelength at the first time instant $t_1$ and the intensity of the response optical radiation $R_{rif}$ at the reference detection wavelength at the second time instant $t_2$,

is greater than a predetermined threshold.

In the currently preferred embodiment, the predetermined detection wavelength is a wavelength belonging to a range of the electromagnetic spectrum corresponding to the red colour, e.g. a wavelength of 630nm - 660nm, and the reference detection wavelength is a wavelength belonging to a range of the electromagnetic spectrum corresponding to the blue colour, e.g. a wavelength of 430nm - 470nm, or a range of the electromagnetic spectrum corresponding to the green colour, e.g. a wavelength of 520nm - 570nm.

In a second embodiment, a verification whether the identification portion is a biological tissue and the verification of the vitality of the identification portion is based on the response of the aforesaid identification portion to an interrogating optical radiation in at least one predetermined verification time interval, and more precisely on the evolution over time of the intensity of the response optical radiation at at least one predetermined detection wavelength. Specifically, the determination that said identification portion is a biological tissue and of the vitality of the identification portion is reached if the temporal evolution of the intensity of the response optical radiation at at least one predetermined detection wavelength exhibits a persistent oscillation over the verification time interval, which is due to the periodic variation of hemoglobin saturation in the blood as a result of blood circulation in a living subject.

In a currently preferred variant embodiment, a verification whether the identification portion is a biological tissue and the verification of the vitality of the identification portion is based on the evolution over time of the intensity of the response optical radiation at a first and a second predetermined detection wavelength, and the determination that said identification portion is a biological tissue and of the vitality of the identification portion is achieved if the evolution over time of the intensity of the response optical radiation at the first and second predetermined detection wavelengths has respectively persistent oscillations in phase opposition, in the verification time interval.

In the currently preferred variant embodiment, the predetermined detection wavelength is a wavelength belonging to a range of the electromagnetic spectrum corresponding to the red colour, e.g. a wavelength of 660nm, and a wavelength belonging to a range of the electromagnetic spectrum corresponding to infrared, e.g. a wavelength of 940nm. This technique exploits the phenomenon of variation in the absorption of an incident optical radiation by the biological tissue of the fingertip of a human finger between a condition wherein the hemoglobin is saturated with oxygen in the blood circulating in the arterial capillaries and a condition wherein the hemoglobin is deficient in oxygen in the blood circulating in the venous capillaries. Specifically, it is known that a wavelength corresponding to the red colour is predominantly absorbed by a blood stream deficient in oxygen (Hb) and absorbed to a lesser extent by a blood stream rich in oxygen ($HbO_2$), while on the contrary a wavelength corresponding to infrared is mainly absorbed by a blood stream rich in oxygen ($HbO_2$) and absorbed to a lesser extent by a blood stream deficient in oxygen (Hb).

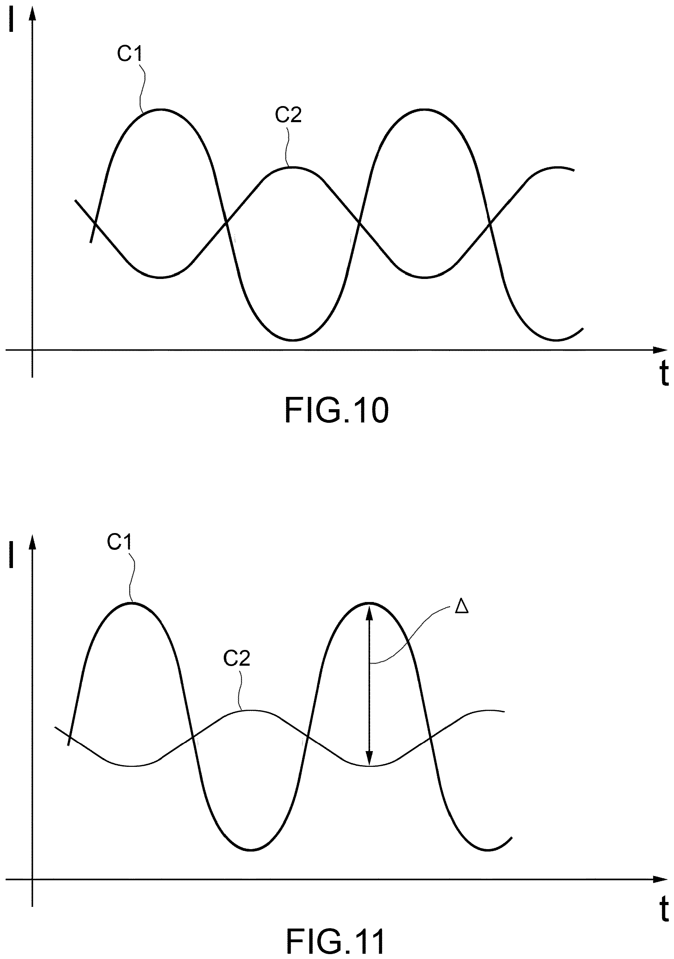

This condition is shown in Figure 10, where C1 indicates an intensity curve of the response optical radiation to an interrogating optical radiation of wavelength corresponding to the red colour, whereas C2 indicates an intensity curve of the response optical radiation to an interrogating optical radiation of wavelength corresponding to infrared.

In a third embodiment, a verification whether the identification portion is a biological tissue and the verification of the vitality of the identification portion is based on the response of the aforesaid identification portion to an interrogating optical radiation in at least one predetermined verification time interval, and more precisely on the difference between a maximum and a minimum value of the intensity of the response optical radiation at at least one predetermined detection wavelength. Specifically, the determination that said identification portion is a biological tissue and of the vitality of the identification portion is reached if the difference between at least one maximum value and at least one minimum value of the intensity of the response optical radiation at the predetermined detection wavelength is greater than a predetermined reference threshold value. The predetermined reference threshold value is indicative of the minimum difference between a maximum value and a minimum value of the intensity of the response optical radiation at the predetermined detection wavelength, which is due to the periodic variation in blood hemoglobin saturation as a result of blood circulation in a living subject.

In a currently preferred variant embodiment a verification whether the identification portion is a biological tissue and the verification of the vitality of the identification portion is based on the determination of a difference between a maximum value of the intensity of the response optical radiation at a first predetermined detection wavelength and a minimum value of the intensity of the response optical radiation at a second predetermined detection wavelength. Therefore, the determination that said identification portion is a biological tissue and of the vitality of the identification portion is reached if the difference between a maximum value and a minimum value of the intensity of the response optical radiation at said predetermined detection wavelengths is greater than a predetermined reference threshold value, wherein the predetermined reference threshold value is indicative of the minimum difference between a maximum value and a minimum value of the intensity of the response optical radiation at the predetermined detection wavelengths, which is due to the periodic variation of hemoglobin saturation in the blood due to blood circulation in a living subject.

This condition is shown in Figure 11, where C1 indicates an intensity curve of the response optical radiation to an interrogating optical radiation of wavelength corresponding to the red colour, and C2 indicates an intensity curve of the response optical radiation to an interrogating optical radiation of wavelength corresponding to infrared, and the difference between the maximum value and the minimum value of the response optical radiation at the aforesaid detection wavelengths is indicated with $\Delta$.

Conveniently, according to an aspect of the present invention, the biometric identification data element of a finger of a subject, acquired and compared with a database of biometric data associated with at least one registered subject, comprises at least one fingerprint of the subject or fingerprint data that are a function of said at least one fingerprint, for example by virtue of an isomorphic or homomorphic coding of an image of the fingerprint.

Alternatively, the biometric identification data of a finger of the subject comprises the same diffusion profile as the material constituting the identification portion of a finger of the subject, which is used to verify whether the identification portion is a biological tissue of the fingertip of a human finger.

Again as an alternative, the biometric identification data of a finger of the subject comprises the same evolution over time of the intensity of a response optical radiation to an interrogating optical radiation by the identification portion of a finger of the subject, which is used to verify whether the identification portion is an identification portion of a living finger.

It should be noted that the embodiment proposed for the present invention in the foregoing discussion is purely by way of non-limiting example of the present invention. A person skilled in the art may easily implement the present invention in different embodiments which however do not depart from scope of the appended claims.

This applies in particular to the possibility of constructing optical radiation sources using different technologies as well as arranging and controlling the optical radiation sources in different ways from those presented, although included within the scope of protection expressed by the accompanying claims.

In addition, the solutions described may be applied to the system as a whole or individually. It will in effect be clear to a person skilled in the art that each individual improvement relating to a specific component of the system may be made independently of the others, and as such claimed independently, without the lack of implementation of the other improvements described undermining the effect thereof.

Obviously, without prejudice to the principle of the invention, the embodiments and the details of implementation may be greatly modified with respect to those described and illustrated purely by way of non-limiting example, without thereby departing from the scope of the invention as defined in the accompanying claims.

**Claims**

1.  Method for the biometric identification of a subject, comprising the acquisition of at least one biometric data element identifying a finger (F) of the subject from an identification portion (T) of said finger (F) and the comparison of said acquired at least one biometric data element with a database of biometric data associated with at least one registered subject,

    the method comprising:

    - the emission of an interrogating optical radiation (R) at a plurality of predetermined interrogation wavelengths towards said identification portion (T) and the reception, from said identification portion (T), of a response optical radiation (Ro) at a plurality of predetermined detection wavelengths, due to subsurface scattering in said identification portion (T); and
    - according to said response optical radiation ($R_0$), the verification whether said identification portion (T) is a biological tissue of the fingertip of a human finger (F) and the verification of the vitality of said identification portion (T);

    wherein the biometric identification of the subject has a positive outcome:

    (i) if said at least one acquired biometric data element is associated with a subject registered in said database of biometric data, and
    (ii) if said identification portion (T) is a biological tissue of the fingertip of a human finger (F) and if said identification portion (T) is alive,

    **characterized in that** the verification whether said identification portion (T) is a biological tissue and the verification of the vitality of said identification portion (T) comprises:

the reception of a response optical radiation (Ro) in at least two successive time instants associated respectively with a first spatial position of said identification portion (T), wherein it is away from a predetermined support surface (A) and with a second spatial position of said identification portion (T) wherein it is in contact with said predetermined support surface (A);
the comparison of the intensity of said response optical radiation (Ro) at at least one predetermined detection wavelength in said two successive time instants with the intensity of said response optical radiation at a reference detection wavelength ($R_{rif}$) different from said at least one predetermined detection wavelength,
the determination that said identification portion (T) is a biological tissue and of the vitality of said identification portion (T) if the intensity of said response optical radiation ($R_0$) at at least one predetermined detection wavelength is greater than the intensity of said response optical radiation ($R_{rif}$) at said reference detection wavelength in the first time instant and if the intensity of said response optical radiation (Ro) at at least one predetermined detection wavelength is lower than the intensity of said response optical radiation ($R_{rif}$) at said reference detection wavelength in the second time instant, or vice versa,

wherein said at least one predetermined detection wavelength is a wavelength belonging to a range of the electromagnetic spectrum corresponding to the red colour and said reference detection wavelength is a wavelength belonging to a range of the electromagnetic spectrum corresponding to a range of the blue colour or to a range of the electromagnetic spectrum corresponding to the green colour.

2. The method according to claim 1, wherein the verification whether said identification portion (T) is a biological tissue of the fingertip of a human finger (F) comprises:

the determination of a diffusion profile of the material constituting said identification portion (T) by said interrogating optical radiation (R);
the comparison of the value of a decay parameter representative of said diffusion profile of the material constituting said identification portion (T) at at least one of said detection wavelengths with a reference value of said parameter which is representative of the diffusion profile of the biological tissue of the fingertip of a human finger (F) for said interrogating optical radiation (R); and
the determination that said identification portion (T) is a biological tissue of the fingertip of a human finger (F) if the value of said parameter representative of the diffusion profile of the material constituting said identification portion (T), at at least one predetermined detection wavelength, is identical to the reference value of the parameter representative of the diffusion profile of the biological tissue of the fingertip of a human finger (F) at said predetermined detection wavelength or differs therefrom within a predetermined tolerance threshold.

3. The method according to claim 2, wherein said diffusion profile is a diffusion profile along a plurality of detection directions within a circular area or a circular sector area ($\Sigma$) of said material constituting said identification portion (T).

4. The method according to claim 2 or 3, wherein the comparison of the value of a parameter representative of said diffusion profile of the material constituting said identification portion (T) with a reference value of said parameter representative of the diffusion profile of the biological tissue of the fingertip of a human finger (F) is performed at a plurality of predetermined detection wavelengths.

5. The method according to any one of claims 2 to 4, wherein said reference value of the parameter representative of the diffusion profile of the biological tissue of the fingertip of a human finger (F) includes one among a reference value of the parameter representative of the diffusion profile of the biological tissue of the fingertip of an ideal human finger and a reference value of the parameter representative of the diffusion profile of the biological tissue of the fingertip of a finger (F) of a subject registered in said database of biometric data.

6. The method according to any one of the preceding claims, wherein the verification whether said identification portion (T) is a biological tissue and the verification of the vitality of said identification portion (T) comprises:

receiving a response optical radiation (Ro) in at least one predetermined verification time interval;
determining the evolution over time of the intensity of said response optical radiation (Ro) at at least one predetermined detection wavelength;

determining that said identification portion (T) is a biological tissue and the vitality of said identification portion (T) if the evolution over time of the intensity of said response optical radiation (C1; C2) at at least one predetermined detection wavelength has a persistent oscillation in the verification time interval.

7. The method according to claim 6, wherein the verification whether said identification portion (T) is a biological tissue and the verification of the vitality of said identification portion (T) comprises:

   receiving a response optical radiation (Ro) in at least one predetermined verification time interval;

   determining the evolution over time of the intensity of said response optical radiation (C1, C2) at a first and a second predetermined detection wavelength;

   determining that said identification portion (T) is a biological tissue and the vitality of said identification portion (T) if the evolution over time of the intensity of said response optical radiation (C1, C2) at said first and second predetermined detection wavelengths has respectively persistent oscillations in phase opposition in the verification time interval.

8. The method according to any one of claims 1 to 5, wherein the verification whether said identification portion (T) is a biological tissue and the verification of the vitality of said identification portion (T) comprises:

   receiving a response optical radiation (Ro) in at least one predetermined verification time interval;

   determining a difference between at least one maximum value and at least one minimum value of the intensity of said response optical radiation (C1, C2) at at least one predetermined detection wavelength;

   determining that said identification portion (T) is a biological tissue and the vitality of said identification portion (T) if the difference ($\Delta$) between at least one maximum value and at least one minimum value of said intensity of the response optical radiation (C1, C2) at said predetermined detection wavelength is greater than a predetermined reference threshold value indicative of the minimum difference between a maximum value and a minimum value of the intensity of said response optical radiation (C1, C2) at said predetermined detection wavelength, which is due to the periodic variation of the hemoglobin saturation in the blood due to blood circulation in a living subject.

9. The method according to claim 8, wherein the verification whether said identification portion (T) is a biological tissue and the verification of the vitality of said identification portion (T) comprises:

   receiving a response optical radiation (Ro) in at least one predetermined verification time interval;

   determining a difference between at least one maximum value of the intensity of said response optical radiation (C1) at a first predetermined detection wavelength and at least one minimum value of the intensity of said response optical radiation (C2) at a second predetermined detection wavelength;

   determining that said identification portion (T) is a biological tissue and the vitality of said identification portion (T) if the difference ($\Delta$) between at least one maximum value and at least one minimum value of said intensity of the response optical radiation (C1; C2) at said predetermined detection wavelengths is greater than a predetermined reference threshold value indicative of the minimum difference between a maximum value and a minimum value of the intensity of said response optical radiation (C1; C2) at said predetermined detection wavelengths, which is due to the periodic variation of the hemoglobin saturation in the blood due to the blood circulation in a living subject.

10. The method according to any one of claims 6 to 9, wherein said at least one predetermined detection wavelength comprises a wavelength belonging to a range of the electromagnetic spectrum corresponding to the red colour and/or a wavelength belonging to an interval of the electromagnetic spectrum corresponding to infrared.

11. The method according to any one of the preceding claims, wherein said at least one biometric data element identifying a finger (F) of the subject comprises at least one fingerprint of the subject or fingerprint data which are a function of said at least one fingerprint.

12. The method according to any one of the preceding claims, wherein said at least one biometric data element identifying a finger (F) of the subject comprises at least one diffusion profile of the material constituting an identification portion (T) of a finger (F) of the subject.

13. The method according to any one of the preceding claims, wherein said at least one biometric data element identifying a finger (F) of the subject comprises the evolution over time of the intensity of at least one response optical radiation (Ro) at at least one of a plurality of predetermined detection wavelengths from an identification portion (T) of a finger (F) of the subject, provided as a response to an interrogating optical radiation (R).

14. A system for the biometric identification of a subject, comprising:

   - a plurality of interrogating optical radiation sources (11-14) adapted to emit optical radiation (R) at a respective plurality of predetermined interrogation wavelengths;
   - optical sensor means (SENS) adapted to detect a response optical radiation (Ro) at a plurality of predetermined detection wavelengths; and
   - signal control and processing means (P) adapted to control said plurality of interrogating optical radiation sources (11-14) and said optical sensor means (SENS) for the acquisition of at least one biometric data element identifying a finger (F) of the subject from an identification portion (T) of said finger (F), arranged for carrying out a method according to any one of claims 1 to 13.

15. The system according to claim 14, further comprising a plurality of optical radiation sources (L1-L4) for illuminating said identification portion (T) of a subject.

16. The system according to claim 14 or 15, wherein said plurality of interrogating optical radiation sources (11-14) includes a plurality of LED devices adapted respectively to emit a radiation (R) at an interrogation wavelength belonging to a range of the electromagnetic spectrum corresponding to the blue colour, a radiation (R) at an interrogation wavelength belonging to a range of the electromagnetic spectrum corresponding to the green colour, a radiation (R) at an interrogation wavelength belonging to a range of the electromagnetic spectrum corresponding to the red colour and a radiation (R) at an interrogation wavelength belonging to a range of the electromagnetic spectrum corresponding to infrared.

17. The system according to claim 15, comprising an arrangement of the interrogating sources (11-14) and of the illuminating sources (L1-L4) which is concentric to the optical sensor means (SENS), said arrangement of the interrogating sources (11-14) and of the illuminating sources (L1-L4) and said sensor means (SENS) being separated from a support surface (A) for said identification portion (T) through an optically transparent substrate (SUB), a focusing lens system (FL) of said response optical radiation (R) being associated with the sensor means (SENS).

18. The system according to claim 17, wherein said illuminating sources (L1-L4) are located on an outer circumferential arrangement and said interrogating sources (11-14) are located on a circumferential arrangement internally concentric to said outer circumferential arrangement of the illuminating sources (L1-L4), respective waveguides (G) being coupled to the illuminating sources (L1-L4) to conduct the illuminating optical radiation towards said support surface (A) through said optically transparent substrate (SUB).

19. The system according to claim 14 or 15, wherein said interrogating sources (11-14) and said illuminating sources (L1-L4) include a cell matrix of LED devices, said cells being adapted to emit selectively an optical radiation (R) at an interrogation wavelength belonging to a range of the electromagnetic spectrum corresponding to the blue colour, an optical radiation at an interrogation wavelength belonging to a range of the electromagnetic spectrum corresponding to the green colour, an optical radiation at an interrogation wavelength belonging to a range of the electromagnetic spectrum corresponding to the red colour, an optical radiation at an interrogation wavelength belonging to a range of the electromagnetic spectrum corresponding to infrared, and an optical radiation at at least one illumination wavelength, and wherein

said signal control and processing means (P) are arranged to control each cell of LED devices of said matrix such that at least one random or pseudo-random subset of said cells emits an optical radiation at an interrogation wavelength or an optical radiation at at least one illumination wavelength according to a random or pseudo-random succession over time.

**Patentansprüche**

1. Verfahren zur biometrischen Identifizierung eines Subjekts, umfassend das Erfassen mindestens eines biometrischen Datenelements, das einen Finger (F) des Subjekts anhand eines Identifikationsabschnitts (T) des Fingers (F) identifiziert, und das Vergleichen des erfassten mindestens einen biometrischen Datenelements mit einer Datenbank biometrischer Daten, die mindestens einem registrierten Subjekt zugeordnet sind,

   wobei das Verfahren Folgendes umfasst:

   - das Emittieren einer optischen Abfragestrahlung (R) mit einer Vielzahl von vorbestimmten Abfragewellenlängen hin zu dem Identifikationsabschnitt (T), und das Empfangen, von dem Identifikationsabschnitt (T), einer optischen Antwortstrahlung (Ro) mit einer Vielzahl von vorbestimmten Detektionswellenlängen infolge von Volumenstreuung in dem Identifikationsabschnitt (T); und

- gemäß der optischen Antwortstrahlung ($R_0$), das Verifizieren, ob der Identifikationsabschnitt (T) ein biologisches Gewebe der Fingerkuppe eines menschlichen Fingers (F) ist, und das Verifizieren der Vitalität des Identifikationsabschnitts (T);

wobei die biometrische Identifizierung des Subjekts ein positives Ergebnis aufweist:

(i) wenn das mindestens eine erfasste biometrische Datenelement einem Subjekt zugeordnet ist, das in der Datenbank biometrischer Daten registriert ist, und

(ii) wenn der Identifikationsabschnitt (T) ein biologisches Gewebe der Fingerkuppe eines menschlichen Fingers (F) ist, und wenn der Identifikationsabschnitt (T) lebendig ist,

**dadurch gekennzeichnet, dass** das Verifizieren, ob der Identifikationsabschnitt (T) ein biologisches Gewebe ist, und das Verifizieren der Vitalität des Identifikationsabschnitts (T) Folgendes umfasst:

das Empfangen einer optischen Antwortstrahlung ($R_0$) zu mindestens zwei aufeinanderfolgenden Zeitpunkten, die jeweils einer ersten räumlichen Position des Identifikationsabschnitts (T), in der er entfernt von einer vorbestimmten Auflagefläche (A) ist, und einer zweiten räumlichen Position des Identifikationsabschnitts (T), in der er in Berührung mit der vorbestimmten Auflagefläche (A) ist, zugeordnet sind;

das Vergleichen von der Intensität der optischen Antwortstrahlung ($R_0$) bei mindestens einer vorbestimmten Detektionswellenlänge zu den zwei aufeinanderfolgenden Zeitpunkten mit der Intensität der optischen Antwortstrahlung bei einer Referenz-Detektionswellenlänge ($R_{rif}$), die sich von der mindestens einen vorbestimmten Detektionswellenlänge unterscheidet,

das Bestimmen, dass der Identifikationsabschnitt (T) ein biologisches Gewebe ist, sowie der Vitalität des Identifikationsabschnitts (T), wenn die Intensität der optischen Antwortstrahlung (Ro) bei mindestens einer vorbestimmten Detektionswellenlänge größer als die Intensität der optischen Antwortstrahlung ($R_{rif}$) bei der Referenz-Detektionswellenlänge zu dem ersten Zeitpunkt ist, und wenn die Intensität der optischen Antwortstrahlung (Ro) bei mindestens einer vorbestimmten Detektionswellenlänge niedriger als die Intensität der optischen Antwortstrahlung ($R_{rif}$) bei der Referenz-Detektionswellenlänge zu dem zweiten Zeitpunkt ist, oder umgekehrt,

wobei die mindestens eine vorbestimmte Detektionswellenlänge eine Wellenlänge ist, die einem Bereich des elektromagnetischen Spektrums angehört, der der roten Farbe entspricht, und wobei die Referenz-Detektionswellenlänge eine Wellenlänge ist, die einem Bereich des elektromagnetischen Spektrums, das der blauen Farbe entspricht, oder einem Bereich des elektromagnetischen Spektrums, das der grünen Farbe entspricht, angehört.

2.  Verfahren nach Anspruch 1, wobei das Verifizieren, ob der Identifikationsabschnitt (T) ein biologisches Gewebe der Fingerkuppe eines menschlichen Fingers (F) ist, Folgendes umfasst:

das Bestimmen eines Diffusionsprofils des Materials, das den Identifikationsabschnitt (T) bildet, mittels der optischen Abfragestrahlung (R);

das Vergleichen von dem Wert eines Zerfallsparameters, der repräsentativ für das Diffusionsprofil des Materials ist, das den Identifikationsabschnitt (T) bildet, bei mindestens einer der Detektionswellenlängen mit einem Referenzwert des Parameters, der repräsentativ für das Diffusionsprofil des biologischen Gewebes der Fingerkuppe eines menschlichen Fingers (F) für die optische Abfragestrahlung (R) ist; und

das Bestimmen, dass der Identifikationsabschnitt (T) ein biologisches Gewebe der Fingerkuppe eines menschlichen Fingers (F) ist, wenn der Wert des Parameters, der repräsentativ für das Diffusionsprofil des Materials ist, das den Identifikationsabschnitt (T) bildet, bei mindestens einer vorbestimmten Detektionswellenlänge identisch mit dem Referenzwert des Parameters ist, der repräsentativ für das Diffusionsprofil des biologischen Gewebes der Fingerkuppe eines menschlichen Fingers (F) bei der vorbestimmten Detektionswellenlänge ist, oder von diesem innerhalb einer vorbestimmten Toleranzschwelle abweicht.

3.  Verfahren nach Anspruch 2, wobei das Diffusionsprofil ein Diffusionsprofil entlang einer Vielzahl von Detektionsrichtungen innerhalb eines kreisförmigen Bereichs oder eines kreisförmigen Sektorbereichs ($\Sigma$) des Materials ist, das den Identifikationsabschnitt (T) bildet.

4.  Verfahren nach Anspruch 2 oder 3, wobei das Vergleichen von dem Wert eines Parameters, der repräsentativ für das Diffusionsprofil des Materials ist, das den Identifikationsabschnitt (T) bildet, mit einem Referenzwert des Parameters, der repräsentativ für das Diffusionsprofil des biologischen Gewebes der Fingerkuppe eines menschlichen Fingers (F) ist, mit einer Vielzahl von vorbestimmten Detektionswellenlängen ausgeführt wird.

5. Verfahren nach einem beliebigen der Ansprüche 2 bis 4, wobei der Referenzwert des Parameters, der repräsentativ für das Diffusionsprofil des biologischen Gewebes der Fingerkuppe eines menschlichen Fingers (F) ist, einen unter einem Referenzwert des Parameters, der repräsentativ für das Diffusionsprofil des biologischen Gewebes der Fingerkuppe eines idealen menschlichen Fingers ist, und einem Referenzwert des Parameters, der repräsentativ für das Diffusionsprofil des biologischen Gewebes der Fingerkuppe eines Fingers (F) eines Subjekts ist, das in der Datenbank biometrischer Daten registriert ist, umfasst.

6. Verfahren nach einem beliebigen der vorhergehenden Ansprüche, wobei das Verifizieren, ob der Identifikationsabschnitt (T) ein biologisches Gewebe ist, und das Verifizieren der Vitalität des Identifikationsabschnitts (T) Folgendes umfasst:

Empfangen einer optischen Antwortstrahlung (Ro) in mindestens einem vorbestimmten Verifizierungszeitintervall;
Bestimmen der zeitlichen Entwicklung der Intensität der optischen Antwortstrahlung (Ro) bei mindestens einer vorbestimmten Detektionswellenlänge;
Bestimmen, dass der Identifikationsabschnitt (T) ein biologisches Gewebe ist, sowie der Vitalität des Identifikationsabschnitts (T), wenn die zeitliche Entwicklung der Intensität der optischen Antwortstrahlung (C1; C2) bei mindestens einer vorbestimmten Detektionswellenlänge eine anhaltende Schwankung in dem Verifizierungszeitintervall aufweist.

7. Verfahren nach Anspruch 6, wobei das Verifizieren, ob der Identifikationsabschnitt (T) ein biologisches Gewebe ist, und das Verifizieren der Vitalität des Identifikationsabschnitts (T) Folgendes umfasst:

Empfangen einer optischen Antwortstrahlung ($R_0$) in mindestens einem vorbestimmten Verifizierungszeitintervall;
Bestimmen der zeitlichen Entwicklung der Intensität der optischen Antwortstrahlung (C1, C2) bei mindestens einer ersten und einer zweiten vorbestimmten Detektionswellenlänge;
Bestimmen, dass der Identifikationsabschnitt (T) ein biologisches Gewebe ist, sowie der Vitalität des Identifikationsabschnitts (T), wenn die zeitliche Entwicklung der Intensität der optischen Antwortstrahlung (C1, C2) bei der ersten und der zweiten vorbestimmten Detektionswellenlänge jeweils anhaltende gegenphasige Schwankungen in dem Verifizierungszeitintervall aufweist.

8. Verfahren nach einem beliebigen der Ansprüche 1 bis 5, wobei das Verifizieren, ob der Identifikationsabschnitt (T) ein biologisches Gewebe ist, und das Verifizieren der Vitalität des Identifikationsabschnitts (T) Folgendes umfasst:

Empfangen einer optischen Antwortstrahlung ($R_0$) in mindestens einem vorbestimmten Verifizierungszeitintervall;
Bestimmen einer Differenz zwischen mindestens einem Maximalwert und mindestens einem Minimalwert der Intensität der optischen Antwortstrahlung (C1, C2) bei mindestens einer vorbestimmten Detektionswellenlänge;
Bestimmen, dass der Identifikationsabschnitt (T) ein biologisches Gewebe ist, sowie der Vitalität des Identifikationsabschnitts (T), wenn die Differenz ($\Delta$) zwischen mindestens einem Maximalwert und mindestens einem Minimalwert der Intensität der optischen Antwortstrahlung (C1, C2) bei der vorbestimmten Detektionswellenlänge größer als ein vorbestimmter Referenzschwellenwert ist, der die Mindestdifferenz zwischen einem Maximalwert und einem Minimalwert der Intensität der optischen Antwortstrahlung (C1, C2) bei der vorbestimmten Detektionswellenlänge angibt, die sich auf die periodische Variation der Hämoglobinsättigung im Blut aufgrund einer Blutzirkulation in einem lebenden Subjekt zurückführen lässt.

9. Verfahren nach Anspruch 8, wobei das Verifizieren, ob der Identifikationsabschnitt (T) ein biologisches Gewebe ist, und das Verifizieren der Vitalität des Identifikationsabschnitts (T) Folgendes umfasst:

Empfangen einer optischen Antwortstrahlung ($R_0$) in mindestens einem vorbestimmten Verifizierungszeitintervall;
Bestimmen einer Differenz zwischen mindestens einem Maximalwert der Intensität der optischen Antwortstrahlung (C1) bei einer ersten vorbestimmten Detektionswellenlänge und mindestens einem Minimalwert der Intensität der optischen Antwortstrahlung (C2) bei einer zweiten vorbestimmten Detektionswellenlänge;
Bestimmen, dass der Identifikationsabschnitt (T) ein biologisches Gewebe ist, sowie der Vitalität des Identifikationsabschnitts (T), wenn die Differenz ($\Delta$) zwischen mindestens einem Maximalwert und mindestens einem Minimalwert der Intensität der optischen Antwortstrahlung (C1; C2) bei den vorbestimmten Detektionswellenlängen größer als ein vorbestimmter Referenzschwellenwert ist, der die Mindestdifferenz zwischen einem Maximalwert und einem Minimalwert der Intensität der optischen Antwortstrahlung (C1; C2) bei den vorbestimmten Detektionswellenlängen angibt, die sich auf die periodische Variation der Hämoglobinsättigung im Blut aufgrund der Blutzirkulation in einem lebenden Subjekt zurückführen lässt.

10. Verfahren nach einem beliebigen der Ansprüche 6 bis 9, wobei die mindestens eine vorbestimmte Detektionswellenlänge eine Wellenlänge, die einem Bereich der elektromagnetischen Strahlung angehört, der der roten Farbe entspricht, und/oder eine Wellenlänge, die einem Intervall des elektromagnetischen Spektrums angehört, das Infrarot entspricht, umfasst.

11. Verfahren nach einem beliebigen der vorhergehenden Ansprüche, wobei das mindestens eine biometrische Datenelement, das einen Finger (F) des Subjekts identifiziert, mindestens einen Fingerabdruck des Subjekts oder Fingerabdruckdaten, die von dem mindestens einen Fingerabdruck abhängig sind, umfasst.

12. Verfahren nach einem beliebigen der vorhergehenden Ansprüche, wobei das mindestens eine biometrische Datenelement, das einen Finger (F) des Subjekts identifiziert, mindestens ein Diffusionsprofil des Materials, das einen Identifikationsabschnitt (T) eines Fingers (F) des Subjekts bildet, umfasst.

13. Verfahren nach einem beliebigen der vorhergehenden Ansprüche, wobei das mindestens eine biometrische Datenelement, das einen Finger (F) des Subjekts identifiziert, die zeitliche Entwicklung der Intensität von mindestens einer optischen Antwortstrahlung ($R_0$) bei mindestens einer von einer Vielzahl von vorbestimmten Detektionswellenlängen von einem Identifikationsabschnitt (T) eines Fingers (F) des Subjekts, die als eine Antwort auf eine optische Abfragestrahlung (R) bereitgestellt wird, umfasst.

14. System zur biometrischen Identifizierung eines Subjekts, umfassend:

    - eine Vielzahl von Quellen (I1-I4) optischer Abfragestrahlung, die dafür ausgelegt sind, optische Strahlung (R) mit einer jeweiligen Vielzahl von vorbestimmten Abfragewellenlängen zu emittieren;
    - optische Sensormittel (SENS), die dafür ausgelegt sind, eine optische Antwortstrahlung ($R_0$) bei einer Vielzahl von vorbestimmten Detektionswellenlängen zu detektieren; und
- Mittel (P) zur Steuerung bzw. Regelung und Verarbeitung von Signalen, die dafür ausgelegt sind, die Vielzahl von Quellen (I1-I4) optischer Abfragestrahlung und die optischen Sensormittel (SENS) zum Erfassen mindestens eines biometrischen Datenelements, das einen Finger (F) des Subjekts anhand eines Identifikationsabschnitts (T) des Fingers (F) identifiziert, zu steuern bzw. zu regeln, die dazu dienen, ein Verfahren nach einem beliebigen der Ansprüche 1 bis 13 auszuführen.

15. System nach Anspruch 14, das ferner eine Vielzahl von Quellen (L1-L4) optischer Strahlung zum Beleuchten des Identifikationsabschnitts (T) eines Subjekts umfasst.

16. System nach Anspruch 14 oder 15, wobei die Vielzahl von Quellen (I1-I4) optischer Abfragestrahlung eine Vielzahl von LED-Vorrichtungen umfasst, die jeweils dafür ausgelegt sind, eine Strahlung (R) mit einer Abfragewellenlänge, die einem Bereich des elektromagnetischen Spektrums angehört, der der blauen Farbe entspricht, eine Strahlung (R) mit einer Abfragewellenlänge, die einem Bereich des elektromagnetischen Spektrums angehört, der der grünen Farbe entspricht, eine Strahlung (R) mit einer Abfragewellenlänge, die einem Bereich des elektromagnetischen Spektrums angehört, der der roten Farbe entspricht, und eine Strahlung (R) mit einer Abfragewellenlänge, die einem Bereich des elektromagnetischen Spektrums angehört, der Infrarot entspricht, zu emittieren.

17. System nach Anspruch 15, das eine Anordnung der Abfragequellen (I1-I4) und der Beleuchtungsquellen (L1-L4) umfasst, die konzentrisch zu den optischen Sensormitteln (SENS) ist, wobei die Anordnung der Abfragequellen (I1-I4) und der Beleuchtungsquellen (L1-L4) und die Sensormittel (SENS) von einer Auflagefläche (A) für den Identifikationsabschnitt (T) durch ein optisch transparentes Substrat (SUB) getrennt sind, wobei ein Fokussierlinsensystem (FL) der optischen Antwortstrahlung (R) den Sensormitteln (SENS) zugeordnet ist.

18. System nach Anspruch 17, wobei sich die Beleuchtungsquellen (L1-L4) auf einer äußeren umlaufenden Anordnung befinden und sich die Abfragequellen (I1-I4) auf einer umlaufenden Anordnung befinden, die intern konzentrisch zu der äußeren umlaufenden Anordnung der Beleuchtungsquellen (L1-L4) ist, wobei jeweilige Wellenleiter (G) so mit den Beleuchtungsquellen (L1-L4) gekoppelt sind, dass sie die optische Beleuchtungsstrahlung durch das optisch transparente Substrat (SUB) hindurch hin zu der Auflagefläche (A) leiten.

**19.** System nach Anspruch 14 oder 15, wobei die Abfragequellen (I1-I4) und die Beleuchtungsquellen (L1-L4) eine Zellmatrix aus LED-Vorrichtungen umfassen, wobei die Zellen dafür ausgelegt sind, wahlweise eine optische Strahlung (R) mit einer Abfragewellenlänge, die einem Bereich des elektromagnetischen Spektrums angehört, der der blauen Farbe entspricht, eine optische Strahlung mit einer Abfragewellenlänge, die einem Bereich des elektromagnetischen Spektrums angehört, der der grünen Farbe entspricht, eine optische Strahlung mit einer Abfragewellenlänge, die einem Bereich des elektromagnetischen Spektrums angehört, der der roten Farbe entspricht, eine optische Strahlung mit einer Abfragewellenlänge, die einem Bereich des elektromagnetischen Spektrums angehört, der Infrarot entspricht, und eine optische Strahlung mit mindestens einer Beleuchtungswellenlänge zu emittieren, und wobei die Mittel (P) zur Steuerung bzw. Regelung und Verarbeitung dafür ausgelegt sind, jede Zelle von LED-Vorrichtungen der Matrix so zu steuern bzw. zu regeln, dass mindestens eine zufällige oder pseudozufällige Teilmenge der Zellen eine optische Strahlung mit einer Abfragewellenlänge oder eine optische Strahlung mit mindestens einer Beleuchtungswellenlänge gemäß einer zufälligen oder pseudozufälligen zeitlichen Abfolge emittiert.

**Revendications**

**1.** Procédé pour l'identification biométrique d'un sujet, comprenant l'acquisition d'au moins un élément de données biométriques identifiant un doigt (F) du sujet depuis une portion d'identification (T) dudit doigt (F) et la comparaison dudit au moins un élément de données biométriques acquis à une base de données de données biométriques associées à au moins un sujet enregistré,

le procédé comprenant :

- l'émission d'un rayonnement optique d'interrogation (R) à une pluralité de longueurs d'onde d'interrogation prédéterminées vers ladite portion d'identification (T) et la réception, depuis ladite portion d'identification (T), d'un rayonnement optique de réponse $(R_0)$ à une pluralité de longueurs d'onde de détection prédéterminées, dû à une transluminescence dans ladite portion d'identification (T) ; et
- selon ledit rayonnement optique de réponse $(R_0)$, la vérification du fait que ladite portion d'identification (T) est un tissu biologique du bout du doigt d'un doigt humain (F) et la vérification de la vitalité de ladite portion d'identification (T) ;

dans lequel l'identification biométrique du sujet a un résultat positif :

(i) si ledit au moins un élément de données biométriques acquis est associé à un sujet enregistré dans ladite base de données de données biométriques, et
(ii) si ladite portion d'identification (T) est un tissu biologique du bout du doigt d'un doigt humain (F) et si ladite portion d'identification (T) est vivante,

**caractérisé en ce que** la vérification du fait que ladite portion d'identification (T) est un tissu biologique et la vérification de la vitalité de ladite portion d'identification (T) comprennent :

la réception d'un rayonnement optique de réponse (Ro) à au moins deux instants successifs associés respectivement à une première position spatiale de ladite portion d'identification (T), dans laquelle elle est éloignée d'une surface de support prédéterminée (A) et à une seconde position spatiale de ladite portion d'identification (T) dans laquelle elle est en contact avec ladite surface de support prédéterminée (A) ;
la comparaison de l'intensité dudit rayonnement optique de réponse (Ro) à au moins une longueur d'onde de détection prédéterminée auxdits deux instants successifs à l'intensité dudit rayonnement optique de réponse à une longueur d'onde de détection de référence $(R_{rif})$ différente de ladite au moins une longueur d'onde de détection prédéterminée,
la détermination du fait que ladite portion d'identification (T) est un tissu biologique et de la vitalité de ladite portion d'identification (T) si l'intensité dudit rayonnement optique de réponse (Ro) à au moins une longueur d'onde de détection prédéterminée est supérieure à l'intensité dudit rayonnement optique de réponse $(R_{rif})$ à ladite longueur d'onde de détection de référence au premier instant et si l'intensité dudit rayonnement optique de réponse $(R_0)$ à au moins une longueur d'onde de détection prédéterminée est inférieure à l'intensité dudit rayonnement optique de réponse $(R_{rif})$ à ladite longueur d'onde de détection de référence au second instant, ou vice versa,

dans lequel ladite au moins une longueur d'onde de détection prédéterminée est une longueur d'onde appartenant à une plage du spectre électromagnétique correspondant à la couleur rouge et ladite longueur d'onde de détection de référence est une longueur d'onde appartenant à une plage du spectre électromagnétique correspondant à la couleur bleue ou à une plage du spectre électromagnétique correspondant à la couleur verte.

2. Procédé selon la revendication 1, dans lequel la vérification du fait que ladite portion d'identification (T) est un tissu biologique du bout du doigt d'un doigt humain (F) comprend :

la détermination d'un profil de diffusion de la matière constituant ladite portion d'identification (T) par ledit rayonnement optique d'interrogation (R) ;
la comparaison de la valeur d'un paramètre de décroissance représentatif dudit profil de diffusion de la matière constituant ladite portion d'identification (T) à au moins une desdites longueurs d'onde de détection à une valeur de référence dudit paramètre qui est représentatif du profil de diffusion du tissu biologique du bout du doigt d'un doigt humain (F) pour ledit rayonnement optique d'interrogation (R) ; et
la détermination du fait que ladite portion d'identification (T) est un tissu biologique du bout du doigt d'un doigt humain (F) si la valeur dudit paramètre représentatif du profil de diffusion de la matière constituant ladite portion d'identification (T), à au moins une longueur d'onde de détection prédéterminée, est identique à la valeur de référence du paramètre représentatif du profil de diffusion du tissu biologique du bout du doigt d'un doigt humain (F) à ladite longueur d'onde de détection prédéterminée ou diffère de celle-ci dans un seuil de tolérance prédéterminé.

3. Procédé selon la revendication 2, dans lequel ledit profil de diffusion est un profil de diffusion suivant une pluralité de directions de détection au sein d'une zone circulaire ou d'une zone de secteur circulaire (Σ) de ladite matière constituant ladite portion d'identification (T).

4. Procédé selon la revendication 2 ou 3, dans lequel la comparaison de la valeur d'un paramètre représentatif dudit profil de diffusion de la matière constituant ladite portion d'identification (T) à une valeur de référence dudit paramètre représentatif du profil de diffusion du tissu biologique du bout du doigt d'un doigt humain (F) est réalisée à une pluralité de longueurs d'onde de détection prédéterminées.

5. Procédé selon l'une quelconque des revendications 2 à 4, dans lequel ladite valeur de référence du paramètre représentatif du profil de diffusion du tissu biologique du bout du doigt d'un doigt humain (F) comporte l'une parmi une valeur de référence du paramètre représentatif du profil de diffusion du tissu biologique du bout du doigt d'un doigt humain idéal et une valeur de référence du paramètre représentatif du profil de diffusion du tissu biologique du bout du doigt d'un doigt (F) d'un sujet enregistré dans ladite base de données de données biométriques.

6. Procédé selon l'une quelconque des revendications précédentes, dans lequel la vérification du fait que ladite portion d'identification (T) est un tissu biologique et la vérification de la vitalité de ladite portion d'identification (T) comprennent :

la réception d'un rayonnement optique de réponse (Ro) dans au moins un intervalle de temps de vérification prédéterminé ;
la détermination de l'évolution dans le temps de l'intensité dudit rayonnement optique de réponse ($R_0$) à au moins une longueur d'onde de détection prédéterminée ;
la détermination du fait que ladite portion d'identification (T) est un tissu biologique et de la vitalité de ladite portion d'identification (T) si l'évolution dans le temps de l'intensité dudit rayonnement optique de réponse (C1 ; C2) à au moins une longueur d'onde de détection prédéterminée présente une oscillation persistante dans l'intervalle de temps de vérification.

7. Procédé selon la revendication 6, dans lequel la vérification du fait que ladite portion d'identification (T) est un tissu biologique et la vérification de la vitalité de ladite portion d'identification (T) comprennent :

la réception d'un rayonnement optique de réponse (Ro) dans au moins un intervalle de temps de vérification prédéterminé ;
la détermination de l'évolution dans le temps de l'intensité dudit rayonnement optique de réponse (C1, C2) à une première et une seconde longueur d'onde de détection prédéterminées ;
la détermination du fait que ladite portion d'identification (T) est un tissu biologique et de la vitalité de ladite portion d'identification (T) si l'évolution dans le temps de l'intensité dudit rayonnement optique de réponse (C1, C2) auxdites première et seconde longueurs d'onde de détection prédéterminées présente respectivement des oscillations persistantes en opposition de phase dans l'intervalle de temps de vérification.

8. Procédé selon l'une quelconque des revendications 1 à 5, dans lequel la vérification du fait que ladite portion d'identification (T) est un tissu biologique et la vérification de la vitalité de ladite portion d'identification (T) comprennent :

la réception d'un rayonnement optique de réponse (Ro) dans au moins un intervalle de temps de vérification prédéterminé ;

la détermination d'une différence entre au moins une valeur maximale et au moins une valeur minimale de l'intensité dudit rayonnement optique de réponse (C1, C2) à au moins une longueur d'onde de détection prédéterminée ;

la détermination du fait que ladite portion d'identification (T) est un tissu biologique et de la vitalité de ladite portion d'identification (T) si la différence ($\Delta$) entre au moins une valeur maximale et au moins une valeur minimale de ladite intensité du rayonnement optique de réponse (C1, C2) à ladite longueur d'onde de détection prédéterminée est supérieure à une valeur seuil de référence prédéterminée indicative de la différence minimale entre une valeur maximale et une valeur minimale de l'intensité dudit rayonnement optique de réponse (C1, C2) à ladite longueur d'onde de détection prédéterminée, qui est due à la variation périodique de la saturation en hémoglobine du sang due à la circulation du sang dans un sujet vivant.

9. Procédé selon la revendication 8, dans lequel la vérification du fait que ladite portion d'identification (T) est un tissu biologique et la vérification de la vitalité de ladite portion d'identification (T) comprennent :

la réception d'un rayonnement optique de réponse (Ro) dans au moins un intervalle de temps de vérification prédéterminé ;

la détermination d'une différence entre au moins une valeur maximale de l'intensité dudit rayonnement optique de réponse (C1) à une première longueur d'onde de détection prédéterminée et au moins une valeur minimale de l'intensité dudit rayonnement optique de réponse (C2) à une seconde longueur d'onde de détection prédéterminée ;

la détermination du fait que ladite portion d'identification (T) est un tissu biologique et de la vitalité de ladite portion d'identification (T) si la différence ($\Delta$) entre au moins une valeur maximale et au moins une valeur minimale de ladite intensité du rayonnement optique de réponse (C1 ; C2) auxdites longueurs d'onde de détection prédéterminées est supérieure à une valeur seuil de référence prédéterminée indicative de la différence minimale entre une valeur maximale et une valeur minimale de l'intensité dudit rayonnement optique de réponse (C1 ; C2) auxdites longueurs d'onde de détection prédéterminées, qui est due à la variation périodique de la saturation en hémoglobine dans le sang due à la circulation du sang dans un sujet vivant.

10. Procédé selon l'une quelconque des revendications 6 à 9, dans lequel ladite au moins une longueur d'onde de détection prédéterminée comprend une longueur d'onde appartenant à une plage du spectre électromagnétique correspondant à la couleur rouge et/ou une longueur d'onde appartenant à un intervalle du spectre électromagnétique correspondant à l'infrarouge.

11. Procédé selon l'une quelconque des revendications précédentes, dans lequel ledit au moins un élément de données biométriques identifiant un doigt (F) du sujet comprend au moins une empreinte digitale du sujet ou des données d'empreinte digitale qui sont fonction de ladite au moins une empreinte digitale.

12. Procédé selon l'une quelconque des revendications précédentes, dans lequel ledit au moins un élément de données biométriques identifiant un doigt (F) du sujet comprend au moins un profil de diffusion de la matière constituant une portion d'identification (T) d'un doigt (F) du sujet.

13. Procédé selon l'une quelconque des revendications précédentes, dans lequel ledit au moins un élément de données biométriques identifiant un doigt (F) du sujet comprend l'évolution dans le temps de l'intensité d'au moins un rayonnement optique de réponse ($R_0$) à au moins l'une d'une pluralité de longueurs d'onde de détection prédéterminées depuis une portion d'identification (T) d'un doigt (F) du sujet, fourni en réponse à un rayonnement optique d'interrogation (R).

14. Système pour l'identification biométrique d'un sujet, comprenant :

- une pluralité de sources de rayonnement optique d'interrogation (I1 à I4) adaptées pour émettre un rayonnement optique (R) à une pluralité respective de longueurs d'onde d'interrogation prédéterminées ;
- des moyens de capteur optique (SENS) adaptés pour détecter un rayonnement optique de réponse (Ro) à une pluralité de longueurs d'onde de détection prédéterminées ; et
- des moyens de commande et de traitement de signal (P) adaptés pour commander ladite pluralité de sources de rayonnement optique d'interrogation (I1 à I4) et lesdits moyens de capteur optique (SENS) pour l'acquisition d'au moins un élément de données biométriques identifiant un doigt (F) du sujet depuis une portion d'identification (T) dudit doigt (F), agencés pour réaliser un procédé selon l'une quelconque des revendications 1 à 13.

**15.** Système selon la revendication 14, comprenant en outre une pluralité de sources de rayonnement optique (L1 à L4) pour illuminer ladite portion d'identification (T) d'un sujet.

**16.** Système selon la revendication 14 ou 15, dans lequel ladite pluralité de sources de rayonnement optique d'interrogation (I1 à I4) comporte une pluralité de dispositifs à DEL adaptés respectivement pour émettre un rayonnement (R) à une longueur d'onde d'interrogation appartenant à une plage du spectre électromagnétique correspondant à la couleur bleue, un rayonnement (R) à une longueur d'onde d'interrogation appartenant à une plage du spectre électromagnétique correspondant à la couleur verte, un rayonnement (R) à une longueur d'onde d'interrogation appartenant à une plage du spectre électromagnétique correspondant à la couleur rouge et un rayonnement (R) à une longueur d'onde d'interrogation appartenant à une plage du spectre électromagnétique correspondant à l'infrarouge.

**17.** Système selon la revendication 15, comprenant un agencement des sources d'interrogation (I1 à I4) et des sources d'illumination (L1 à L4) qui est concentrique aux moyens de capteur optique (SENS), ledit agencement des sources d'interrogation (I1 à I4) et des sources d'illumination (L1 à L4) et lesdits moyens de capteur (SENS) étant séparés d'une surface de support (A) pour ladite portion d'identification (T) par le biais d'un substrat optiquement transparent (SUB), un système de lentille de focalisation (FL) dudit rayonnement optique de réponse (R) étant associé aux moyens de capteur (SENS).

**18.** Système selon la revendication 17, dans lequel lesdites sources d'illumination (L1 à L4) sont situées sur un agencement circonférentiel externe et lesdites sources d'interrogation (I1 à I4) sont situées sur un agencement circonférentiel intérieurement concentrique audit agencement circonférentiel externe des sources d'illumination (L1 à L4), des guides d'onde (G) respectifs étant couplés aux sources d'illumination (L1 à L4) pour diriger le rayonnement optique d'illumination vers ladite surface de support (A) à travers ledit substrat optiquement transparent (SUB).

**19.** Système selon la revendication 14 ou 15, dans lequel lesdites sources d'interrogation (I1 à I4) et lesdites sources d'illumination (L1 à L4) comportent une matrice cellulaire de dispositifs à DEL, lesdites cellules étant adaptées pour émettre sélectivement un rayonnement optique (R) à une longueur d'onde d'interrogation appartenant à une plage du spectre électromagnétique correspondant à la couleur bleue, un rayonnement optique à une longueur d'onde d'interrogation appartenant à une plage du spectre électromagnétique correspondant à la couleur verte, un rayonnement optique à une longueur d'onde d'interrogation appartenant à une plage du spectre électromagnétique correspondant à la couleur rouge, un rayonnement optique à une longueur d'onde d'interrogation appartenant à une plage du spectre électromagnétique correspondant à l'infrarouge, et un rayonnement optique à au moins une longueur d'onde d'illumination,
et dans lequel
lesdits moyens de commande et de traitement de signal (P) sont agencés pour commander chaque cellule des dispositifs à DEL de ladite matrice de sorte qu'au moins un sous-ensemble aléatoire ou pseudo-aléatoire desdites cellules émette un rayonnement optique à une longueur d'onde d'interrogation ou un rayonnement optique à au moins une longueur d'onde d'illumination selon une succession aléatoire ou pseudo-aléatoire dans le temps.

FIG.1

FIG.2

FIG.3

FIG.4

FIG.5

FIG.6

I1    I2    I3    I4    SENS    L1    L2    L3    L4

FIG.7

FIG.8a

FIG.8b

FIG.8c

FIG.8d

$t=t_1$

F

T

A

$t=t_2$

F

T

A

# FIG.9a

$I_0$

$R_0$

$R_{rif}$

$t_1$

$t_2$

$t$

# FIG.9b

FIG.10

FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1353292 A

- US 2017220844 A

**Non-patent literature cited in the description**

- **P. VENKATA REDDY et al.** A New Method for Fingerprint Antispoofing using Pulse Oximetry. *First IEEE International Conference on Biometrics: theory, applications and systems,* 2007